# EUROPEAN PATENT APPLICATION

(11) **EP 1 686 677 A1**
(43) Date of publication of application: **02.08.2006**
(21) Application number: 04766922.1
(22) Date of filing: 25.08.2004
(51) Int. Cl.: H02K 53/00, F03B 17/00

(54) **MECHANICAL FORCE-GENERATING SYSTEM**

(30) Priority: 31.10.2003 ES 200302196
(71) Applicant: Gomez Portela, César, 15172 Oleiros (ES)
(72) Inventor: Gomez Portela, César, 15172 Oleiros (ES)
(74) Representative: Carpintero Lopez, Francisco
(86) International application number: PCT/ES2004/000383
(87) International publication number: WO 2005/043728

(57) **Abstract**

The invention relates to a mechanical force-generating system. The inventive system is designed to move a main rotary part with the injection of a fluid which is propelled through one or more pumps or through one or more electric motors, in order to transmit force to a novel mechanical system which can optimise the energy to be produced by an alternator or generator. The mechanical system is **characterised in that** it comprises an assembly of rotary elements which, by means of a series of speed-reducing and speed-increasing units, transmits the appropriate force required to drive an energy alternator or generator. The invention can be used to produce electric energy for domestic or industrial use or automotive or ship elements.

## Description

### Background of the Invention.

The existence is widely known of the search for and the need to find a system of electric power generation able to work efficiently, in terms of both economic and ecological cost, with a minimum dependence on external factors, and which allows the use of said electric power in all types of machinery, automotive and ship elements, for its use in both a domestic and industrial environment.

Indeed, a plurality of devices are available on the market, the purpose of which is to supply electric power, both for domestic use and for business activity, as well as to deliver electricity to places where the direct use of the electric mains is not possible; these devices, in turn, endeavour to achieve that the cost is the least possible. By way of example are the storage systems which, due to the lower cost of the electricity of the standard distribution mains during the night, accumulate electric power during this period in order to use it later in daytime. There are also the generating systems based on solar photovoltaic cells, which supplement the conventional supply. Other examples are found in the generator sets that deliver energy where the electric mains cannot reach, or as an emergency measure when the electricity supply fails due to a fault; in these cases, the acoustic impact of the appliances which realize the supply is usually significant. As for the automotive industry, the development is known of elements which work through air compressors.

Now, in all the aforementioned alternative systems (as well as in others known but not included here) there is a dependence on the external provision of energy (they depend on the standard distribution mains, on certain atmospheric factors or on a natural effect such as the sun which, on one hand, signify a low yield, since investment is made in sophisticated equipment which rarely achieves full autonomy (they continue to be a mere supplement to the conventional supply), and, on the other hand, they signify a minimum saving. Furthermore, with these systems, either meaningful ecological benefits are not achieved (the normalized electric mains continues to be used, for which reason the environmental impact that this involves is not minimized), or the installation cost is so high that it is difficult to redeem at domestic level (fundamentally the solar systems).

The present invention has been developed with the intention of mitigating all the drawbacks pointed out, inherent in the devices used at the present time.

### Object of the invention.

It is a question of providing an autonomous and ecological system (even obviating acoustic pollution), constituted by a rotary element by way of a turbine, driven by the controlled fall of a fluid (preferably water), in a closed circuit and impelled through one or more pumps. The fluid and the one or more pumps can be replaced by one or more motors, which would be fed with the inertia of the same rotary element. It is important to point out that the fluid and the one or more pumps can work in an alternative manner with the one or more motors, or in a complementary manner. The rotary element is supported on a shaft, and its rotation transmits the force to a mechanical system of necessary and sufficient rotary elements which will allow the energy to be obtained, required not only to move, but also to maintain in movement an energy-producing unit (alternator, generator, etc.).

The main object of the invention, as can be appreciated, is to provide an independent energy-generating mechanical system, of simple and economic construction, high-performance and minimum maintenance, which will allow electric power to be obtained with zero environmental impact and which is suitable for use both in the domestic and the industrial environment, and in automotive and ship means.

### Brief description of the drawings.

The qualities and advantages of the invention will be easily seen by any technical expert in the matter, with the help of the explanation below, and which has been prepared in relation with the accompanying drawing, in which a perspective is shown by way of illustration and not restrictively, of a preferred embodiment of the mechanical force-generating system object of the invention.

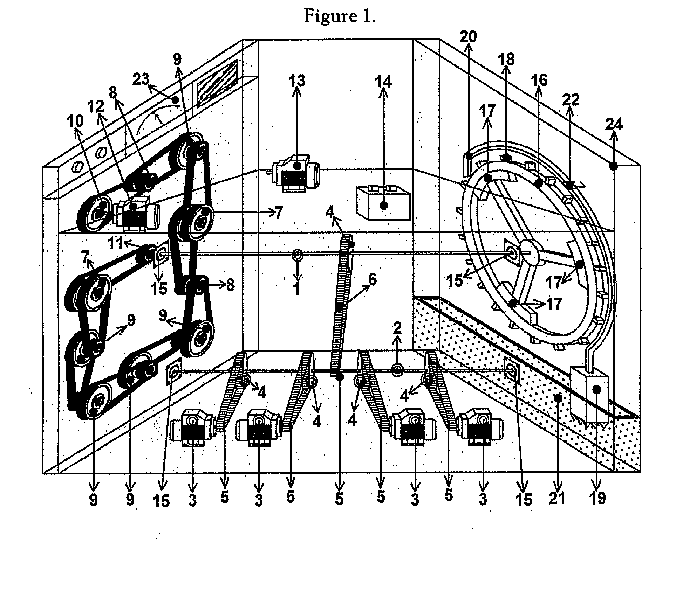

Figure 1 shows the framework or fixture, open and viewed from the front, in which the mechanical force-generating system is installed.

### Preferred embodiment of the invention.

The mechanical force-generating system object of this application, consists of a force-generating system and of a mechanical system of transmission and multiplication of the force generated to the element producing the energy.

For starting it up, there is the element number 13 "Starter Motor".

The force-generating system consists of a device formed mainly by a shaft (1) which crosses the machine from side to side, and acts as the shaft both for the force-generating system and for the force transmission and multiplication system. On said shaft is inserted a rotary element or drive wheel (16) driven by the controlled fall of a fluid previously supplied from a tank (21). This drive wheel is supported on spokes with counterbalances (17), and when rotary actuates the mechanical system of force transmission and multiplication. This device also contains a volumetric pump (19) which impels the fluid from the aforementioned tank, producing the necessary force to work the drive wheel (16). The fluid impelled by the pump goes to the main rotary element (16), and this returns it to the tank for its later reuse, forming thereby a closed circuit. If the machine requires a continuous and uninterrupted use, successive volumetric pumps can be installed which would be alternated with the first, this way there would always be some of the pumps at rest. An alternative to the volumetric pump and to the fluid, would be constituted by the installation of a system which consists of one or several variable-power motors (3) which will be actuated in terms of the specific energy needs. Each motor would have two wheels or rotary elements (4 and 5) of different size: the smaller one (5) coupled to the respective motor, and the larger one (4) coupled to the shaft (2), both joined by a transmission element (6). In turn, the shafts 1 and 2 are connected through a new transmission element incorporated by a small wheel (5) and a large one (4) with a belt (6). The motor of this system receives the inertia of the rotary element (16), which causes the force applied by the motor to be less (practically nonexistent). This system could be used as an alternative to the system described before of the pump and the fluid, or complementary to the same, in terms of the use and of the specific needs. This system also has a conventional external agent installed - a cell or a battery (14) - which will serve in the initial start-up of the one or more pumps and/or of the one or more motors.

Among the electric or electronic generating means, which include a generator or an alternator (12), a current converter can be included or other appropriate means to adapt the voltage in terms of the specific needs. These means are in themselves well known, for which reason it is considered unnecessary to include a detailed description.

The main rotary element or drive wheel (16) is supported on a central shaft (1) which contains some bearings (15) at both sides, so allowing, the drive wheel to be connected with the force transmission system. The rotational movement delivered by the drive wheel is achieved through the fluid which falls impinging directly on some blades (18) mounted externally on the circumference of said drive wheel. (Keep in mind that set out in connection with the substitution of or concordance with the motor system). The system also has a means of ducting (20) which maintains the fluid in continuous circulation by means of the one or more volumetric pumps once the system is started. The force or volume of the fluid is regulated in by means of a line valve (22), which will allow more or less quantity of fluid to pass to facilitate the yield required from the generator or alternator, in order to fully obtain the required force.

The mechanical system of transmission and multiplication of the force consists of a number of rotary elements connected in series. The first rotary element (11) - small wheel coupled to the main shaft (1) - it will be smaller than the element 7 (large double pulley) to which it is connected by means of a force transmission element (6) (belts connecting rotary elements). The elements numbered with 7 will be identical to each other, likewise the elements numbered with 9 (small big pulley) must also be similar to each other.

The element 7 is connected with the element 9 (small large pulley) which in turn is connected with another or some other elements 9. This set of elements 9 is repeated a certain number of times until their connection with the element 8 (small double pulley). The element 8 is connected with the element 7 and this with the element 9, which in turn is connected with another or some other elements 9. The series described is repeated again and again. At the end of the series, the element 8 connects with the element 10 (large single pulley) until managing to transmit to the generator or alternator (12) the necessary number of rotations for the continuous operation of the same.

From the foregoing, it is appreciated that the system is based on speed-reducing and speed-increasing units in series intended to transmit the necessary force to move an energy generator (alternator, generator, etc.).

The mechanical force-generating system, as a whole, is installed in a frame or fixture (24), with side walls which limit the dimensions of the machine, and houses in its interior all the systems described in the preceding paragraphs.

The assembly is completed with a control panel (23) on the external part of the fixture.

## Claims

1. Mechanical force-generating system is an autonomous and ecological system of generating electric power or force, of simple and economic construction, high-performance and minimum maintenance, suitable for use in the domestic environment, in industry, in automotive and ship means; it is the result of two interconnected systems: a force-generating system and a mechanical system of force transmission and multiplication, both joined by a central shaft (1) and connected to a generator (12).

2. Mechanical force-generating system, according to claim 1, **characterized in that** it contains a force-generating system which, in turn, comprises a central shaft (1), a drive wheel (16) coupled to said shaft, which has some counterbalances (17), and which produces the sufficient inertia, by means of one or more volumetric pumps (19) and a fluid and/or one or more motors, which inertia is converted into force, this system also comprising a battery (14) which feeds the starter motor (13) which puts the whole system into operation.

3. Mechanical force-generating system, according to claim 1, **characterized in that** it contains a mechanical system of force transmission and multiplication which, in turn, comprises a series of rotary elements of various sizes (7,8,9,...) forming a series which is repeated throughout the system, connected to each other by a transmission element (6), the last element of the series being connected, by means of a pulley (10), to the electric power generator or alternator (12), which remains in continuous movement because of the turning of the rotary elements described.
